# EUROPEAN PATENT SPECIFICATION

(11) **EP 4 109 599 B1**
(45) Date of publication and mention of the grant of the patent: **22.10.2025**
(21) Application number: 21886704.2
(22) Date of filing: 22.10.2021
(51) Int. Cl.: H01M 4/587, H01M 10/0525, C01B 32/205, H01M 4/04, H01M 4/133, H01M 4/1393, H01M 4/36, H01M 4/02

(54) **NEGATIVE ELECTRODE ACTIVE MATERIAL FOR LITHIUM SECONDARY BATTERY, NEGATIVE ELECTRODE, AND LITHIUM SECONDARY BATTERY**
NEGATIVELEKTRODENAKTIVMATERIAL FÜR LITHIUMSEKUNDÄRBATTERIE, NEGATIVELEKTRODE UND LITHIUMSEKUNDÄRBATTERIE
MATÉRIAU ACTIF D'ÉLECTRODE NÉGATIVE POUR BATTERIE SECONDAIRE AU LITHIUM, ÉLECTRODE NÉGATIVE ET BATTERIE SECONDAIRE AU LITHIUM

(30) Priority: 30.10.2020 KR 20200142661
(43) Date of publication of application: 28.12.2022
(73) Proprietor: LG Energy Solution, Ltd., Seoul 07335 (KR)
(72) Inventor: LEE, Chang Ju, Daejeon 34122 (KR); LEE, Yong Ju, Daejeon 34122 (KR); WOO, Sang Wook, Daejeon 34122 (KR)
(74) Representative: Hoffmann Eitle
(86) International application number: PCT/KR2021/014881
(87) International publication number: WO 2022/092710

(56) References cited:
- EP-A1- 3 670 475
- CN-A- 110 870 115
- JP-A- 2001 023 634
- KR-A- 20190 019 430
- KR-A- 20200 039 715
- KR-A- 20200 076 504
- KR-B1- 101 096 936
- KR-B1- 101 840 054
- KR-B1- 102 124 948
- KR-B1- 102 141 060

## Description

### [Technical Field]

The present invention relates to a negative electrode active material for a lithium secondary battery, a negative electrode, and a lithium secondary battery, and more particularly, to a negative electrode active material for a lithium secondary battery, a negative electrode, and a lithium secondary battery, in which adhesive force and rolling rate of the negative electrode can be enhanced by the increase of the tap density of the negative electrode active material.

### [Background Art]

As the use of fossil fuels rapidly increases, the demand for alternative energy and clean energy is on the increase, and accordingly, fields related to energy generation and storage by using electrochemical reaction are currently mostly actively studied.

A representative example of an electrochemical device, which uses such electrochemical energy, is a secondary battery, and the range of use of the secondary battery is on the gradual increase. Recently, as technologies for portable devices such as portable computers, portable phones, and cameras are developed and their demands increase, the demand for secondary batteries as an energy source is also rapidly growing. Generally, a secondary battery is composed of a positive electrode, a negative electrode, an electrolyte and a separator. The negative electrode includes a negative electrode active material which intercalates and deintercalates lithium ions from the positive electrode, and graphite-based active material such as natural graphite or artificial graphite may be used as the negative electrode active material.

The artificial graphite is mainly used in the form of secondary particles. To this end, generally, cokes, which are materials of initial particles, are granulated as secondary particles, which are graphited through heat treatment, to thereby obtain artificial graphite in the form of secondary particles.

Herein, when following the general manufacturing method in which the size of the initial particles is not controlled, artificial graphite in the form of secondary particles has a limit in increasing the tap density due to irregular shapes (less than 1.1 g/cc), and if the tap density is low, the content of the solids of the slurry for formation of a negative electrode becomes low, which causes the drop of the adhesive force and the decrease of the rolling rate during the electrode manufacturing process.

As such, in order to increase the tap density of artificial graphite, a method of mixing initial particles and secondary particles has been proposed, but this had a problem that a swelling phenomenon occurs or a rapid charging performance is deteriorated due to the increase of the orientation degree of the negative electrode.

Korean Patent Publication No. 2020-0076504 discloses a technology in which a negative electrode active material, which uses particle-size-controlled green cokes, improves the discharge capacity and charge/discharge efficiency of a secondary battery and also improves high speed discharge and charge output characteristics of a secondary battery. However, since the technology uses green coke as the material, an additional process of carbonizing secondary particles is required. JP2001023634A and EP3670475A1 disclose agglomerated anode active materials obtained by agglomeration of carbonaceous precursors.

Hence, there is a need for a technology for improving the tap density without a separate process while following the conventional artificial graphite manufacturing process.

### [Disclosure]

### [Technical Problem]

The present invention is believed to solve at least some of the above problems. For example, an aspect of the present invention provides a negative electrode active material for a lithium secondary battery, which improves the tap density without an additional process in a conventional process of manufacturing secondary particle artificial graphite.

### [Technical Solution]

A negative electrode active material for a lithium secondary battery according to claim 1 is composed of artificial graphite secondary particles obtained by granulating carbon-based initial particles having different average particle diameters (D₅₀), in which the carbon-based initial particles include particle group A where an average particle diameter (D₅₀) is a, and particle group B where an average particle diameter (D₅₀) is b, and b < 0.6a.

Herein, a tap density is equal to or greater than 1.1 g/cc and may preferably be in a range of 1.2 to 1.4 g/cc. Wherein a is in a range of 11 to 15 *µ*m.

In an embodiment of the present invention, the carbon-based initial particles may further include particle group C where an average particle diameter is c, and c < b.

In an embodiment of the present invention, c < 0.4a.

In an embodiment of the present invention, c < 0.6b.

An average particle diameter (D₅₀) of the negative electrode active material particles according to an embodiment of the present invention is in a range of 10 to 25 *µ*m.

In an embodiment of the present invention, the secondary particles include adhesive binders located between the initial particles.

In an embodiment of the present invention, the carbon-based initial particles are composed of one or a combination of two or more selected from the group consisting of petroleum coke, pitch coke and needle coke.

The present invention provides a negative electrode including the above-mentioned negative electrode active material for a lithium secondary battery.

The present invention provides a lithium secondary battery including the above-mentioned negative electrode active material for a lithium secondary battery.

A method of manufacturing a negative electrode active material for a lithium secondary battery according to the present invention includes: mixing carbon-based initial particles having different average particle diameters (D₅₀); forming secondary particles by mixing adhesive binders; and graphitizing the secondary particles.

In an embodiment of the present invention, the carbon-based initial particles include particle group A where an average particle diameter (D₅₀) is a, and particle group B where an average particle diameter (D₅₀) is b, and a mixing ratio of the particle group A and the particle group B is in a range of 2: 1 to 1: 2 based on a weight.

In an embodiment of the present invention, the carbon-based initial particles further include particle group C where an average particle diameter (D₅₀) is c, and a content of the particle group C corresponds to 5 to 25% of a total weight of the particle group A and the particle group B.

### [Advantageous Effects]

In the present invention, as secondary particles are granulated from carbon-based initial particles having different average particle diameters, relatively small initial particles are filled in the pores of relatively large initial particles, which significantly increases the tap density, which shows the effect of increasing the adhesive force and high temperature storage performance of the negative electrode.

### [Detailed Description of the Preferred Embodiments]

Hereinafter, the present invention will be described in detail with reference to the drawings. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof.

In the present specification, D₅₀ may be defined as a particle size corresponding to 50% of the volume accumulation amount in the particle diameter distribution curve of particles, Dₘₐₓ may be defined as the largest particle size among particle sizes shown in the particle diameter distribution curve, and Dₘᵢₙ may be defined as the smallest particle size among particle sizes shown in the particle diameter distribution curve. D₅₀, Dₘᵢₙ and Dₘₐₓ may be measured using the particle size distribution (PSD) which is derived through a laser diffraction method. The laser diffraction method can generally measure a particle diameter of several mm from a submicron region, and can obtain results of high reproducibility and high resolution.

In the present specification, the tap density may be a density which is calculated by putting 40g negative electrode active material particles in a container and tapping the container 1000 times.

Hereinafter, the present invention will be described in detail.

### <Negative electrode active material for lithium secondary battery>

A negative electrode active material for a lithium secondary battery according to the present invention is composed of artificial graphite secondary particles obtained by granulating carbon-based initial particles having different average particle diameters (D₅₀), in which the carbon-based initial particles include particle group A where an average particle diameter (D₅₀) is a, and particle group B where an average particle diameter (D₅₀) is b, and b < 0.6a.

In the present specification, the term "initial particle" means an original particle when another kind of particle is formed from a certain particle, and secondary particles may be formed by combination or granulation of a plurality of initial particles.

In the present specification, the term "secondary particle" means a large particle which can be physically recognized formed by combination or granulation of initial particles.

In the present specification, the "granulation" of initial particles means formation of secondary particles by voluntary or artificial aggregation of a plurality of initial particles.

The carbon-based initial particles are composed of one or a combination of two or more selected from the group consisting of petroleum coke, pitch coke and needle coke.

In the present invention, the particle size of the carbon-based initial particles was controlled to improve the tap density of the negative electrode active material composed of artificial graphite of secondary particles. In the present invention, the tap density was improved by reducing the inner pore formed between particles by assembling initial particles having different average particle diameters (D₅₀). The inventors of the present invention found that when carbon-based initial particles include particle group A where an average particle diameter (D₅₀) is a, wherein the a is in a range of 11 to 15µm and particle group B where an average particle diameter (D₅₀) is b, and b < 0.6a, the tap density of secondary particles of artificial graphite becomes equal to or greater than 1.1 g/cc. and reached the present invention.

According to an embodiment of the present invention, it is possible to provide a negative electrode active material for a lithium secondary battery where the tap density is in the range of 1.2 to 1.4 g/cc by controlling the particle size and the mixing ratio of particle group A where an average particle diameter (D₅₀) is a, and particle group B where an average particle diameter (D₅₀) is b. Further, when manufacturing a slurry for formation of a negative electrode using a negative electrode active material where the tap density is equal to or greater than 1.1 g/cc, the content of solids in the slurry may be made to be equal to or greater than 56 wt%. Accordingly, as the migration of the binder is restricted during the drying process, the adhesive force between the negative electrode and the current collector may be improved, and as the thickness of the electrode decreases, the rolling rate can be improved during the rolling process, and the high temperature storage performance can be improved by the reduction of the damage to the electrode.

The average particle diameter a of the particle group A where an average particle diameter (D50) is a is in the range of 11 to 15 *µ*m, and preferably 12 to 13 *µ*m.

According to an embodiment of the present invention, the carbon-based initial particles may further include particle group C where an average particle diameter is c in addition to particle group A where an average particle diameter (D₅₀) is a, and particle group B where an average particle diameter (D₅₀) is b. At this time, the c is smaller than the b. The tap density can be further improved as the particle group C where an average particle diameter is c is filled in fine pores formed by the particle group A where an average particle diameter (D50) is a and the particle group B where an average particle diameter (D50) is b. At this time, in order to maximize the improvement effects of the tap density, it is preferable that c < 0.4a and c < 0.6b.

The secondary particles of the present invention can be formed by granulating carbon-based initial particles. Namely, the secondary particles may be a structure formed by aggregation of the initial particles. The secondary particles may contain adhesive binders which allow aggregation of the initial particles. The adhesive binders are positioned between initial particles to provide adhesive force between the initial particles, to thereby form secondary particles by granulation of the initial particles. Some examples of the adhesive binder include one or a combination of two or more selected from the group consisting of petroleum-based pitch, coal-based pitch and mesophase pitch.

Likewise, the average particle diameter (D₅₀) of artificial graphite secondary particles, which are obtained by granulating particle-size-controlled carbon-based initial particles, may be in the range of 10 to 25 *µ*m, and preferably 11 to 20 *µ*m. When the above range is satisfied, the negative electrode active material particles may be evenly dispersed in the negative electrode slurry, and the charging performance of the battery can also be improved.

### <Method of manufacturing negative electrode active material for lithium secondary battery>

A method of manufacturing a negative electrode active material for a lithium secondary battery according to the present invention may include: mixing carbon-based initial particles having different average particle diameters (D₅₀); forming secondary particles by mixing adhesive binders; and graphitizing the secondary particles.

In a method of manufacturing a negative electrode active material of the present invention, the mixing for manufacturing the negative electrode active material can be performed by a mechanical milling or a simple mixing which uses a scheme known in the related field. For example, the mixing can be performed by simply using mortar or may be performed by mechanically applying compressive stress by performing rotation at 100 to 1000 rpm using a blade or a ball mill.

The step of mixing carbon-based initial particles having different average particle diameters (D₅₀) is a step of controlling the diameter of initial particles and includes a step of preparing and mixing particle group A where the average particle diameter (D₅₀) is a and particle group B where the average particle diameter (D₅₀) is b. The mixing ratio of the particle group A and the particle group B is preferably in the range of 2: 1 to 1: 2. The tap density enhancement effect can be maximized when the mixing ratio is satisfied.

In an embodiment of the present invention, the step of mixing carbon-based initial particles having different average particle diameters (D₅₀) may further include a step of mixing particle group C where the average particle diameter (D₅₀) is c in addition to particle group A where the average particle diameter (D₅₀) is a and particle group B where the average particle diameter (D₅₀) is b. At this time, the content of the particle group C is preferably in the range of 5 to 25 wt% of the total weight of the particle group A and the particle group B because the tap density improvement effects can be maximized in this range.

Since the specific numerical ranges and relationships of above a, b and c have been described in detail above, further description will be omitted.

The step of forming secondary particles by mixing the adhesive binders may include mixing and stirring adhesive binders with particle-size-controlled carbon-based initial particles. Through this, the carbon-based initial particles can be aggregated to thereby be granulated. The adhesive binder may be a coal-based pitch or a petroleum-based pitch, and the mixing and stirring may be performed at a temperature of 200 to 900°C, and specifically 300 to 500°C.

The step of graphitizing the secondary particles may include a process of graphitizing the secondary particles, which are formed by the mixture of the carbon-based initial particles and adhesive binders, through calcination.

The calcination may be performed by performing heating at a temperature of 2500 to 3500°C, and specifically a temperature of 2800 to 3200°C. The average particle diameter (D₅₀) of the secondary particles graphitized by the calcination may be in the range of 10 to 25 *µ*m.

### <negative electrode>

The present invention provides a negative electrode for a secondary battery containing the above-described negative electrode active material.

The negative electrode for a lithium secondary battery includes a negative electrode current collector and a negative electrode active material layer.

Any negative electrode current collector, which is generally used in the related art, may be used as the negative electrode current collector. For example, any negative electrode current collector, which has a high conductivity while not causing chemical changes to a lithium secondary battery, may be used as the negative electrode current collector. For example, a negative electrode current collector may be made of copper, stainless steel, aluminum, nickel, titanium, sintered carbon, cooper or stainless steel of which the surface has been treated with carbon, nickel, titanium, silver or the like, or an aluminum-cadmium alloy.

In addition, in the negative electrode current collector, fine unevenness can be formed on the surface to enhance the bonding force of the negative electrode active material, and it can be used in various forms such as a film, a sheet, a foil, a net, a porous body, a foam, and a nonwoven fabric.

The negative electrode current collector may generally have a thickness of 3 to 500 *µ*m.

The negative electrode active material layer is formed on the negative electrode current collector.

The negative electrode active material layer includes the negative electrode active material for a lithium secondary battery of artificial graphite secondary particles obtained by granulation of carbon-based initial particles having different average particle diameters (D₅₀) of the present invention. The content of the negative electrode active material for the lithium secondary battery may be in the range of 80 to 90 wt% of the total weight of the negative electrode active material layer.

The negative electrode active material layer may further include at least one selected from a binder and a conductive material in addition to a negative electrode active material.

The binder is a component that assists the bonding between the conductive material, the active material and the current collector, and is typically added in an amount of 1 to 30 wt% based on the total weight of the negative electrode active material layer.

Examples of such binders include polyvinylidene fluoride (PVdF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated EPDM, styrene butadiene rubber, fluorine rubber, and various combinations thereof.

Any thickener, which is conventionally used for a lithium secondary battery, may be used as the thickener. For example, carboxymethylcellulose (CMC) may be used.

The conductive material is a component for further improving the conductivity of the negative electrode active material, and may be added in an amount of 1 to 30 wt% based on the total weight of the negative electrode active material layer.

Such a conductive material is not particularly limited as long as it has electrical conductivity without causing a chemical change in the battery, and examples thereof include graphite such as natural graphite and artificial graphite; carbon black such as acetylene black, Ketjen black, channel black, furnace black, lamp black, and thermal black; conductive fibers such as carbon fiber and metal fiber; carbon fluoride; metal powders such as aluminum and nickel powder; conductive whiskey such as zinc oxide and potassium titanate; conductive metal oxides such as titanium oxide; and conductive materials such as polyphenylene derivatives and the like. Specific examples of commercially available conductive materials include products of Chevron Chemical Company, Denka Singapore Private Limited, Gulf Oil Company products, Ketjenblack, EC series (Armak Company), Vulcan XC-72 (Cabot Company) and Super P (Timcal).

The negative electrode active material layer may be manufactured by preparing a negative electrode slurry by mixing a negative electrode active material for a lithium secondary battery with at least one additive selected from a binder and a conductive material and a thickener in a solvent, applying the negative electrode slurry on the negative electrode current collector, and rolling and drying the negative electrode current collector.

The solvent may include water or an organic solvent such as NMP (N-methyl-2-pyrrolidone), and may be used in an amount that becomes a desirable viscosity when the negative electrode active material and optionally a binder and a conductive material are included. For example, the concentration of solids, which contain a negative electrode active material for a lithium secondary battery, and optionally contain a binder, a thickener and a conductive material, may be in the range of 50 to 95 wt%.

### <Lithium secondary battery>

In addition, the present invention provides a lithium secondary battery including the negative electrode for the lithium secondary battery described above.

The lithium secondary battery may include a negative electrode for a lithium secondary battery, a positive electrode for a lithium secondary battery, and a separator interposed between the negative electrode for the lithium secondary battery and the positive electrode for the lithium secondary battery.

Specifically, the lithium secondary battery of the present invention may be manufactured by injecting a non-aqueous electrolyte solution into an electrode structure composed of a negative electrode for a lithium secondary battery, a positive electrode for a lithium secondary battery, and a separator interposed between the negative electrode for the lithium secondary battery and the positive electrode for the lithium secondary battery. At this time, a positive electrode, a negative electrode and a separator, which have been commonly used in manufacturing a lithium secondary battery, may be used as the positive electrode, the negative electrode, and the separator which form an electrode structure.

At this time, the positive electrode may be manufactured by coating a positive electrode active material slurry including a positive electrode active material and optionally a binder, a conductive material, and a solvent, etc. on a positive electrode current collector and then performing drying and rolling.

The positive electrode current collector is not particularly limited as long as it has conductivity without causing a chemical change in the battery. Examples of the positive electrode current collector include stainless steel, aluminum, nickel, titanium, sintered carbon or aluminum or stainless steel of which the surface has been treated with carbon, nickel, titanium, silver, or the like.

The positive electrode active material is a compound capable of reversible intercalation and deintercalation of lithium, and may specifically include a lithium composite metal oxide containing lithium and at least one metal such as cobalt, manganese, nickel or aluminum. More specifically, some examples of the lithium composite metal oxide include lithium-manganese oxide (e.g., LiMnO₂, LiMn₂O₄, etc.), lithium-cobalt oxide (e.g., LiCoO₂, etc.), lithium-nickel oxide (e.g., LiNiO₂, etc.), lithium-nickel-manganese oxide (e.g., LiNi_{1-Y}Mn_{Y}O₂ (herein, 0<Y<1), LiMn_{2-z}Ni_{z}O₄ (herein, 0 < Z < 2), etc.), lithium-nickel-cobalt oxide (e.g., LiNi_{1-Y1}Co_{Y1}O₂ (herein, 0<Y1<1), etc.), lithium-manganese-cobalt oxide (e.g., LiCo_{1-Y2}Mn_{Y2}O₂ (herein, 0<Y2<1), LiMn_{2-z1}Co_{z1}O₄ (herein,0 < Z1 < 2 ), etc.), lithium-nickel-manganese-cobalt oxide (e.g., Li(NiₚCo_{q}Mnᵣ₁)O₂ (herein, 0 < p < 1, 0 < q < 1, 0 < r1 < 1, p+q+r1=1) or Li(Niₚ₁Co_{q1}Mnᵣ₂)O₄ (herein, 0 < p1 < 2, 0 < q1 < 2, 0 < r2 < 2, p1+q1+r2=2), etc.), and lithium-nickel-cobalt-transition metal (M) oxide (e.g., Li(Niₚ₂Co_{q2}Mnᵣ₃M_{S2})O₂ (herein, M is one selected from the group consisting of Al, Fe, V, Cr, Ti, Ta, Mg and Mo; p2, q2, r3 and s2 are atomic fractions of respectively independent elements; and 0 < p2 < 1, 0 < q2 < 1, 0 < r3 < 1, 0 < s2 < 1, p2+q2+r3+s2=1), etc.), and one or a mixture of two or more thereof may be used. Herein, the lithium composite metal oxide may be LiCoO₂, LiMnO₂, LiNiO₂, lithium nickel manganese cobalt oxide (e.g., Li(Ni_{0.6}Mn_{0.2}Co_{0.2})O₂, Li(Ni_{0.5}Mn_{0.3}Co_{0.2})O₂, or Li(Ni_{0.8}Mn_{0.1}Co_{0.1})O₂, etc.), or lithium nickel cobalt aluminum oxide (e.g., Li(Ni_{0.8}Co_{0.15}Al_{0.05})O₂, etc.) in terms of increasing the capacity characteristics and stability of the battery, and the lithium composite metal oxide may be Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂ in consideration of the significance of improvement effects according to the control of the content ratio and type of elements forming the lithium composite metal oxide, and one or a mixture of two or more may be used.

The positive electrode active material may be included in 80% by weight to 99% by weight based on the total weight of each positive electrode mixture.

The binder is added in an amount of 1 to 30% by weight, on the basis of the total weight of the positive electrode mixture, as a component that assists in bonding between the active material and the conductive material and bonding to the current collector. Examples of such binders include polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, fluorine rubber, various copolymers and the like.

The conductive material is usually added in an amount of 1 to 30% by weight based on the total weight of the positive electrode mixture.

Such a conductive material is not particularly limited as long as it has electrical conductivity without causing a chemical change in the battery, and examples thereof include graphite; a carbonaceous material such as carbon black, acetylene black, Ketjen black, channel black, furnace black, lamp black, and thermal black; conductive fibers such as carbon fiber and metal fiber; carbon fluoride; metal powders such as aluminum and nickel powder; conductive whiskey such as zinc oxide and potassium titanate; conductive metal oxides such as titanium oxide; and conductive materials such as polyphenylene derivatives and the like. Specific examples of commercially available conductive materials include products of Chevron Chemical Company, Denka Singapore Private Limited, Gulf Oil Company products, Ketjenblack, EC series (Armak Company), Vulcan XC-72 (Cabot Company) and Super P (Timcal).

The solvent may include an organic solvent such as NMP (N-methyl-2-pyrrolidone), and may be used in an amount that becomes a desirable viscosity when the positive electrode active material and optionally a binder and a conductive material are included.

In the lithium secondary battery, the separator is used to separate the negative electrode from the positive electrode and provide a moving path of lithium ions, and any separator generally used in a lithium secondary battery may be used without any special limitation. In particular, a separator having a high electrolyte solution moisturization capability and a low resistance to ion movement of electrolyte solution is preferred. Specifically, porous polymer films, for example, porous polymer films made of polyolefin-based polymers such as ethylene homopolymers, propylene homopolymers, ethylene/butene copolymers, ethylene/hexene copolymers and ethylene/methacrylate copolymers may be used. Further, a nonwoven fabric made of a conventional porous nonwoven fabric, for example, glass fiber of high melting point, polyethylene terephthalate fiber, or the like may be used. In order to secure heat resistance or mechanical strength, a coated separator containing a ceramic component or a polymer material may be used, and may be optionally used as a single layer or a multilayer structure.

Examples of the electrolyte used in the present invention include an organic liquid electrolyte, an inorganic liquid electrolyte, a solid polymer electrolyte, a gel polymer electrolyte, a solid inorganic electrolyte, and a molten inorganic electrolyte which can be used in the production of a lithium secondary battery, but the present invention is not limited to these examples.

Specifically, the electrolyte may include an organic solvent and a lithium salt.

The organic solvent may be any organic solvent that can act as a medium through which ions involved in an electrochemical reaction of a battery can move. Specifically, some examples of the organic solvent may include: an ester-based solvent such as methyl acetate, ethyl acetate, gamma-butyrolactone, and ε-caprolactone; an ether-based solvent such as dibutyl ether or tetrahydrofuran; a ketone-based solvent such as cyclohexanone; an aromatic hydrocarbon-based solvent; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN; amides such as dimethyl formamide; dioxolans such as 1,3-dioxolan; or sulfolanes. Among them, a carbonate-based solvent is preferable, and a mixture of a cyclic carbonate (for example, ethylene carbonate or propylene carbonate) having a high ionic conductivity and a high dielectric constant and a linear carbonate compound having a low viscosity (for example, ethyl methyl carbonate, dimethyl carbonate or diethyl carbonate), said mixture being able to increase the charge/discharge performance of a battery, is more preferable. In this case, when the cyclic carbonate and the chain carbonate are mixed in a volume ratio of about 1: 1 to about 1: 9, the performance of the electrolytic solution may be excellent.

The lithium salt can be used without any particular limitation as long as it is a compound capable of providing lithium ions used in a lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, or LiB(C₂O₄)₂ may be used as the lithium salt. The concentration of the lithium salt is preferably within the range of 0.1 to 2.0M. When the concentration of the lithium salt is within the above range, the electrolyte has an appropriate conductivity and viscosity, so that it can exhibit excellent electrolyte performance and the lithium ions can effectively move.

Since the lithium secondary battery according to the present invention stably shows excellent discharge capacity, rapid charge characteristics and capacity retention rate, it is useful for portable devices such as mobile phones, laptop computers, and digital cameras, and electric vehicles such as hybrid electric vehicles (HEV) and may particularly be used as the battery constituting a medium and large battery module. Therefore, the present invention also provides a medium and large battery module including the above secondary battery as a unit battery.

Such a medium and large battery module may be preferably applied to a power source requiring high power and large capacity, such as electric vehicles, hybrid electric vehicles, power storage devices, and the like.

Hereinafter, the present invention will be described in detail with reference to examples. However, the embodiments according to the present invention may be modified into various other forms, and the scope of the present invention should not be construed as being limited to the examples described below. The examples of the present invention are provided to more fully describe the present invention to those skilled in the art.

### Example 1

By grinding coke initial particles, a particle group (particle group D) where the average particle diameter of ground particles was 13 *µ*m, and a particle group (particle group E) where the average particle diameter of the ground particles was 7 *µ*m were prepared.

After mixing the particle group D and the particle group E in the weight ratio of 1: 1, 11 parts by weight of the pitch, where the softening point was 120°C, were mixed based on 100 parts by weight of the mixture. Thereafter, they were mixed using a heatable mixer for 3 hours to thereby prepare secondary particles.

Thereafter, the negative electrode active material, where the average particle diameter was 18 *µ*m, was manufactured by graphitizing them by raising temperature to 3000°C.

### Example 2 not according to the invention.

By grinding coke initial particles, a particle group (particle group E) where the average particle diameter of ground particles was 7 *µ*m, and a particle group (particle group F) where the average particle diameter of the ground particles was 4 *µ*m were prepared and mixed.

Thereafter, a negative electrode active material, where the average particle diameter was 12 *µ*m, was manufactured by performing granulation and graphitization in the same manner as in the example 1.

### Example 3

By grinding coke initial particles, a particle group (particle group D) where the average particle diameter of ground particles was 13 *µ*m, a particle group (particle group E) where the average particle diameter of ground particles was 7 *µ*m, and a particle group (particle group F) where the average particle diameter of the ground particles was 4 *µ*m were prepared and mixed. At this time, the mixing ratio of the particle group D and the particle group E is 1: 1 based on the weight ratio, and 20 parts by weight of the particle group F were mixed based on the total weight of the particle group D and the particle group E.

Thereafter, a negative electrode active material, where the average particle diameter was 15 *µ*m, was manufactured by performing granulation and graphitization in the same manner as in the example 1.

### Comparative Example 1

A negative electrode active material, where the average particle diameter was 20 *µ*m, was manufactured by performing granulation and graphitization for the particle group D in the example 1.

### Comparative Example 2

A negative electrode active material, where the average particle diameter was 15 *µ*m, was manufactured by performing granulation and graphitization for the particle group E in the example 1.

### Comparative Example 3

A negative electrode active material, where the average particle diameter was 7 *µ*m, was manufactured by performing granulation and graphitization for the particle group F in the example 1.

### Comparative Example 4

A negative electrode active material, which was obtained by mixing the negative electrode active material of the comparative example 1 and the negative electrode active material of the comparative example 3 in the weight ratio of 1: 1, was prepared.

### Experimental Example 1: Measurement of tap density

40 g negative electrode active material particles of examples 1 to 3 and comparative examples 1 to 4 were respectively put in a container, which was then tapped 1000 times. Thereafter, the tap density was calculated, and the result is shown in Table 1.

### Experimental Example 2: Evaluation of adhesive force of negative electrode

The negative electrode active material of 96 parts by weight, the carbon black conductive material of 0.5 parts by weight, SBR binder of 2.3 parts by weight, and CMC of 1.2 parts by weight were dispersed in distilled water to thereby prepare a negative electrode slurry, which was then applied on a 15 *µ*m copper current collector and dried, to thereby manufacture a negative electrode. At this time, the temperature of the air circulated was 110°C. Thereafter, the negative electrode was rolled and dried in a vacuum oven of 130°C for 2 hours.

Each negative electrode was manufactured in the same manner for each negative electrode active material of examples 2 to 3 and comparative examples 1 to 4.

The negative electrode was cut into a 20 mm * 150 mm size, which was then fixed on the central portion of a 25 mm * 75 mm slide glass. Thereafter, the peel strength was measured while peeling the current collector off using UTM. After measuring 5 or more peel strengths, the average was obtained for evaluation. The results are shown in Table 1.

### Experimental Example 3: Evaluation of battery capacity and high temperature lifespan performance

Li[Ni_{0.6}Mn_{0.2}Co_{0.2}]O₂ was used as the positive electrode active material. A positive electrode slurry was manufactured by mixing the positive electrode active material, carbon black as a conductive material, and polyvinylidene fluoride (PVdF) as a binder at the weight ratio of 94: 4: 2, in N-methyl-2-pyrrolidone. The prepared positive electrode slurry was applied on an aluminum metal thin film which is a positive electrode current collector where the thickness is 15 *µ*m, which was then dried. At this time, the temperature of the air circulated was 110°C. Thereafter, it was dried in a vacuum oven in a temperature of 130°C for 2 hours, to thereby manufacture a positive electrode including a positive electrode active material layer.

The negative electrode, the manufactured positive electrode and porous polypropylene separator were assembled in a stacking scheme, and a lithium secondary battery was manufactured by injecting an electrolyte solution into the assembled battery.

Thereafter, after activating the lithium secondary battery by charging the battery up to SOC 30% with 0.2C current, it was charged at CC/CV mode (4.2V, 0.05C cut-off) and was discharged at CC mode (0.2C current, 3.0V cut-off) 3 times. Thereafter, by repeatedly charging and discharging the secondary battery in a chamber in a temperature of 45°C with 1C current, each capacity retention rate at the 100-th, 200-th and 300-th cycle was evaluated, and the result is shown in Table 1. The battery capacity and the high temperature lifespan performance of Table 1 indicate the remaining capacity at the 300-th cycle and the capacity retention rate at the 300-th cycle, and the capacity retention rate was calculated by substitution into the following equation (1). Capacity retention rate (%) = (Discharge capacity after high temperature charge and discharge/ Initial discharge capacity) x 100

**[Table 1]**

| | Tap density (g/cc) | Adhesive force (gf/10mm) | Battery capacity (mAh/g) | High temperature lifespan performance of battery (capacity retention rate, %) |
|---|---|---|---|---|
| Example 1 | 1.22 | 24 | 352 | 90.8 |
| Example 2 | 1.20 | 22 | 349 | 90.5 |
| Example 3 | 1.33 | 27 | 351 | 91.3 |
| Comparative Example 1 | 1.15 | 19 | 352 | 88.8 |
| Comparative Example 2 | 1.07 | 18 | 350 | 87.8 |
| Comparative Example 3 | 0.98 | 15 | 348 | 86.4 |
| Comparative Example 4 | 1.10 | 16 | 351 | 86.7 |

Referring to the above Table 1, the tap density of the negative electrode active material of examples 1 to 3 of the present invention was significantly better than that of the negative electrode active material of comparative examples 1 to 4. As such, the adhesive force of the negative electrode, to which the negative electrode active material of examples 1 to 3 had been applied, was significantly better than the adhesive force of the negative electrode, to which the negative electrode active material of comparative examples 1 to 4 had been applied, as the concentration of solids of the slurry of the negative electrode, to which the negative electrode active material of examples 1 to 3 had been applied, was improved.

Further, the high temperature lifespan performance of the secondary battery, to which negative electrode active materials have been applied, according to examples 1 to 3 is better than that in the comparative example. This seems to be because as the negative electrode active material according to the present invention influenced the rolling performance, the side reaction, which occurs on the interface with the negative electrode, decreased.

The above description is merely illustrative of the technical idea of the present invention, and those skilled in the art to which the present invention pertains may make various modifications and variations without departing from the essential characteristics of the present invention. Therefore, the drawings disclosed in the present invention are not intended to limit the technical idea of the present invention but to describe the present invention, and the scope of the technical idea of the present invention is not limited by these drawings. The scope of protection of the present invention should be interpreted by the following claims, and all technical ideas within the scope equivalent thereto should be construed as being included in the scope of the present invention.

## Claims

1. A negative electrode active material for a lithium secondary battery, the negative electrode active material composed of artificial graphite secondary particles obtained by granulating carbon-based initial particles having different average particle diameters (D₅₀),
wherein the carbon-based initial particles include particle group A where an average particle diameter (D₅₀) is a, and particle group B where an average particle diameter (D₅₀) is b, and wherein b < 0.6a, wherein the a is in a range of 11 to 15 *µ*m, wherein a tap density of the negative electrode active material is equal to or greater than 1.1 g/cm³ (1.1 g/cc), and wherein the tap density and the average particle diameter (D₅₀) are determined as described in the specification.

2. The negative electrode active material of claim 1, wherein a tap density of the negative electrode active material is in a range of 1.2 to 1.4 g/cm³ (1.2 to 1.4 g/cc).

3. The negative electrode active material of claim 1, wherein the carbon-based initial particles further include particle group C where an average particle diameter is c, and wherein c < b.

4. The negative electrode active material of claim 3, wherein c < 0.4a.

5. The negative electrode active material of claim 4, wherein c < 0.6b.

6. The negative electrode active material of claim 1, wherein an average particle diameter (D₅₀) of the negative electrode active material particles is in a range of 10 to 25 *µ*m.

7. The negative electrode active material of claim 1, wherein the secondary particles include adhesive binders located between the initial particles.

8. The negative electrode active material of claim 1, wherein the carbon-based initial particles are composed of one or a combination of two or more selected from the group consisting of petroleum coke, pitch coke and needle coke.

9. A negative electrode including the negative electrode active material for a lithium secondary battery according to claim 1.

10. A lithium secondary battery including the negative electrode active material for a lithium secondary battery according to claim 1.

11. A method of manufacturing a negative electrode active material for a lithium secondary battery as defined in claim 1, the method comprising:
mixing carbon-based initial particles having different average particle diameters (D₅₀);
forming secondary particles by mixing adhesive binders; and
graphitizing the secondary particles.

12. The method of claim 11, wherein the carbon-based initial particles include particle group A where an average particle diameter (D₅₀) is a, and particle group B where an average particle diameter (D₅₀) is b, and
wherein a mixing ratio of the particle group A and the particle group B is in a range of 2: 1 to 1: 2 based on a weight.

13. The method of claim 12, wherein the carbon-based initial particles further include particle group C where an average particle diameter (D₅₀) is c, and
wherein a content of the particle group C corresponds to 5 to 25% of a total weight of the particle group A and the particle group B.

## Patentansprüche

1. Negativelektrodenaktivmaterial für eine Lithium-Sekundärbatterie, wobei das Negativelektrodenaktivmaterial aus künstlichen Graphit-Sekundärteilchen, die durch Granulieren von Kohlenstoff-basierten Ausgangsteilchen mit unterschiedlichen mittleren Teilchendurchmessern (D₅₀) erhalten werden, aufgebaut ist,
wobei die Kohlenstoff-basierten Ausgangsteilchen eine Teilchengruppe A mit einem mittleren Teilchendurchmesser (D₅₀) von a und eine Teilchengruppe B mit einem mittleren Teilchendurchmesser (D₅₀) von b umfassen, und wobei b < 0,6a ist, worin a in einem Bereich von 11 bis 15 µm liegt, wobei eine Klopfdichte des Negativelektrodenaktivmaterials gleich oder größer als 1,1 g/cm³ (1,1 g/cc) ist, und wobei die Klopfdichte und der mittlere Teilchendurchmesser (D₅₀) wie in der Beschreibung angegeben bestimmt werden.

2. Negativelektrodenaktivmaterial nach Anspruch 1, wobei die Klopfdichte des Negativelektrodenaktivmaterials in einem Bereich von 1,2 bis 1,4 g/cm³ (1,2 bis 1,4 g/cc) liegt.

3. Negativelektrodenaktivmaterial nach Anspruch 1, wobei die Kohlenstoff-basierten Ausgangsteilchen ferner eine Teilchengruppe C umfassen, bei der der mittlere Teilchendurchmesser c beträgt und wobei c < b ist.

4. Negativelektrodenaktivmaterial nach Anspruch 3, wobei c < 0,4a ist.

5. Negativelektrodenaktivmaterial nach Anspruch 4, wobei c < 0,6b ist.

6. Negativelektrodenaktivmaterial nach Anspruch 1, wobei ein mittlerer Teilchendurchmesser (D₅₀) der Teilchen des Negativelektrodenaktivmaterials in einem Bereich von 10 bis 25 µm liegt.

7. Negativelektrodenaktivmaterial nach Anspruch 1, wobei die Sekundärteilchen zwischen den Ausgangsteilchen angeordnete Haftbindemittel umfassen.

8. Negativelektrodenaktivmaterial nach Anspruch 1, wobei die Kohlenstoff-basierten Ausgangsteilchen aus einem oder einer Kombination von zwei oder mehr ausgewählt aus der Gruppe bestehend aus Petrolkoks, Pechkoks und Nadelkoks aufgebaut sind.

9. Negative Elektrode, die das Negativelektrodenaktivmaterial für eine Lithium-Sekundärbatterie gemäß Anspruch 1 enthält.

10. Lithium-Sekundärbatterie, die das Negativelektrodenaktivmaterial für eine Lithium-Sekundärbatterie gemäß Anspruch 1 umfasst.

11. Verfahren zur Herstellung eines Negativelektrodenaktivmaterials für eine Lithium-Sekundärbatterie wie in Anspruch 1 definiert, wobei das Verfahren folgendes umfasst:
Mischen von Kohlenstoff-basierten Ausgangsteilchen mit unterschiedlichen mittleren Teilchendurchmessern (D₅₀);
Bilden von Sekundärteilchen durch Mischen von Haftbindemitteln; und
Graphitisieren der Sekundärteilchen.

12. Verfahren nach Anspruch 11, bei dem die Kohlenstoff-basierten Ausgangsteilchen eine Teilchengruppe A mit einem mittleren Teilchendurchmesser (D₅₀) von a und eine Teilchengruppe B mit einem mittleren Teilchendurchmesser (D₅₀) von b umfassen, und
wobei das Mischungsverhältnis der Teilchengruppe A und der Teilchengruppe B in einem Bereich von 2:1 bis 1:2, bezogen auf das Gewicht, liegt.

13. Verfahren nach Anspruch 12, bei dem die Kohlenstoff-basierten Ausgangsteilchen ferner eine Teilchengruppe C mit einem mittleren Teilchendurchmesser (D₅₀) von c umfassen, und
wobei ein Gehalt der Teilchengruppe C 5 bis 25 % des Gesamtgewichts der Teilchengruppe A und der Teilchengruppe B entspricht.

## Revendications

1. Matériau actif d'électrode négative pour une batterie secondaire au lithium, le matériau actif d'électrode négative composé de particules secondaires de graphite artificiel obtenues par granulation de particules primaires à base de carbone présentant différents diamètres (D₅₀) moyens de particule,
dans lequel les particules primaires à base de carbone incluent le groupe de particules A où un diamètre (D₅₀) moyen de particule est a, et le groupe de particules B où un diamètre (D₅₀) moyen de particule est b, et dans lequel b < 0,6a, dans lequel a est dans une plage de 11 à 15 µm, dans lequel une densité de prise du matériau actif d'électrode négative est égale ou supérieure à 1,1 g/cm³ (1,1 g/cc), et dans lequel la densité de prise et le diamètre (D₅₀) particulaire moyen sont déterminés tel que décrit dans le fascicule.

2. Matériau actif d'électrode négative selon la revendication 1, dans lequel une densité de prise du matériau actif d'électrode négative est dans une plage de 1,2 à 1,4 g/cm³ (1,2 à 1,4 g/cc).

3. Matériau actif d'électrode négative selon la revendication 1, dans lequel les particules primaires à base de carbone incluent en outre le groupe de particules C où un diamètre moyen de particule est c, et dans lequel c < b.

4. Matériau actif d'électrode négative selon la revendication 3, dans lequel c < 0,4a.

5. Matériau actif d'électrode négative selon la revendication 4, dans lequel c < 0,6b.

6. Matériau actif d'électrode négative selon la revendication 1, dans lequel un diamètre (D₅₀) moyen de particule des particules de matériau actif d'électrode négative est dans une plage de 10 à 25 µm.

7. Matériau actif d'électrode négative selon la revendication 1, dans lequel les particules secondaires incluent des liants adhésifs situés entre les particules primaires.

8. Matériau actif d'électrode négative selon la revendication 1, dans lequel les particules primaires à base de carbone sont composées d'une ou d'une combinaison de deux ou plusieurs sélectionnées parmi le groupe consistant en coke de pétrole, coke de brai et coke en aiguilles.

9. Électrode négative incluant le matériau actif d'électrode négative pour une batterie secondaire au lithium selon la revendication 1.

10. Batterie secondaire au lithium incluant le matériau actif d'électrode négative pour une batterie secondaire au lithium selon la revendication 1.

11. Procédé de fabrication d'un matériau d'électrode négative pour une batterie secondaire au lithium tel que défini selon la revendication 1, le procédé comprenant :
le mélange de particules primaires à base de carbone présentant différents diamètres (D₅₀) moyens de particule ;
la formation de particules secondaires par mélange de liants adhésifs ; et
la graphitisation des particules secondaires.

12. Procédé selon la revendication 11, dans lequel les particules primaires à base de carbone incluent le groupe de particules A où un diamètre moyen (D₅₀) de particule est a, et le groupe de particules B où un diamètre (D₅₀) moyen de particule est b, et
dans lequel un rapport de mélange du groupe de particules A et du groupe de particules B est dans une plage de 2 : 1 à 1: 2 en fonction d'un poids.

13. Procédé selon la revendication 12, dans lequel les particules primaires à base de carbone incluent en outre le groupe de particules C où un diamètre moyen (D₅₀) de particule est c, et
dans lequel une teneur du groupe de particules C correspond à 5 à 25 % d'un poids total du groupe de particules A et du groupe de particules B.
